# EUROPÄISCHE PATENTANMELDUNG

(11) **EP 3 514 011 A1**
(43) Veröffentlichungstag der Anmeldung: **24.07.2019**
(21) Anmeldenummer: 18213832.1
(22) Anmeldetag: 19.12.2018
(51) Int. Cl.: B60Q 1/48, B60Q 1/30, B60Q 9/00, B60Q 1/32

(54) **ELEKTRONISCHES BREMSSYSTEM**

(30) Priorität: 19.01.2018 DE 102018101188
(71) Anmelder: WABCO GmbH, 30453 Hannover (DE)
(72) Erfinder: STENDER, Axel, 31787 Hameln (DE); RISSE, Rainer, 30982 Pattensen-Reden (DE); VON DER BEEKE, Jan-Christoph, 38114 Braunschweig (DE); WITTE, Norbert, 31867 Lauenau (DE)
(74) Vertreter: Koschnitzki, Thomas

(57) **Zusammenfassung**

Die Erfindung betrifft ein elektronisches Bremssystem für Fahrzeuge mit elektronischem Bremsensteuergerät (11), Näherungssensoren (16, 17) und Leuchten (18, 19), wobei die Näherungssensoren mit dem Bremsensteuergerät verbunden sind und die Leuchten über Leitungen mit einer mit Spannung versorgten Schnittstelle (23) verbunden sind. Erfindungsgemäß ist in den Leitungen zwischen der Schnittstelle (23) und den Leuchten (18, 19) ein Relais-Modul (24) vorgesehen und zur Aktivierung der Leuchten vom Bremsensteuergerät (11) ansteuerbar.

## Beschreibung

Die Erfindung betrifft ein elektronisches Bremssystem für Fahrzeuge, mit elektronischem Bremsensteuergerät, Näherungssensoren und Leuchten, wobei die Näherungssensoren mit dem Bremsensteuergerät verbunden sind und die Leuchten über Leitungen mit einer mit Spannung versorgten Schnittstelle verbunden sind. Daneben betrifft die Erfindung ein Bremsensteuergerät und ein Fahrzeug mit elektronischem Bremssystem.

Unter der Bezeichnung EB+ Soft Docking wird vom Hersteller Haldex ein System angeboten, bei dem ein elektronisches Bremssystem eine zusätzliche Elektronikeinheit aufweist, welche mit Ultraschallsensoren gekoppelt ist und bei Rückwärtsfahrt in Abhängigkeit vom Abstand zu einem Hindernis Warnleuchten oder Positionslampen aktiviert, siehe www.haldex.com/softdocking.

Ein wesentlicher Nachteil der bekannten Lösung ist die separate Elektronikeinheit zur Kommunikation mit den Näherungssensoren.

Aus der WO 2010/060491 A1 ist ein Anhängefahrzeug mit elektronischem Bremssystem bekannt, bei dem rückwärtige Sensoren und Beleuchtungselemente über Kabel mit einer Zentraleinheit des Bremssystems verbunden sind.

Aufgabe der vorliegenden Erfindung ist eine möglichst einfache und einfach nachrüstbare Ansteuerung der Leuchten mittels des Bremsensteuergeräts, insbesondere in Abhängigkeit von den Signalen der Näherungssensoren.

Zur Lösung der Aufgabe weist das erfindungsgemäße Bremssystem die Merkmale des Anspruchs 1 auf. Insbesondere ist vorgesehen, dass in den Leitungen zwischen der Schnittstelle und den Leuchten ein Relais-Modul vorgesehen und zur Aktivierung der Leuchten vom Bremsensteuergerät ansteuerbar ist. Die Verarbeitung der Signale der Näherungssensoren kann direkt im Bremsensteuergerät stattfinden. Hierzu kann das Bremsensteuergerät entsprechende Eingänge und eine entsprechend angepasste Software ausweisen. Die Leuchten werden mittelbar durch das Bremsensteuergerät aktiviert, nämlich durch Ansteuerung des Relais-Moduls. Letzteres ist ein mechanisch und elektrisch einfaches und leicht nachrüstbares Bauteil. Eine spezielle Anpassung der Leuchten an das Bremsensteuergerät (oder umgekehrt) ist nicht erforderlich. Das Bremsensteuergerät muss lediglich einen elektrischen Ausgang aufweisen, der zur Ansteuerung des Relais-Moduls geeignet ist. Außerdem ist durch die Verwendung des Relais-Moduls eine galvanische Trennung zwischen der Spannungsversorgung für die Leuchten einerseits und dem Bremsensteuergerät andererseits möglich und vorzugsweise vorgesehen.

Nach einem weiteren Gedanken der Erfindung ist wenigstens eine der nachfolgenden Leuchten über Leitungen mit dem Relais-Modul verbunden:
- seitliche Leuchten,
- Spurhalteleuchten,
- Positionsleuchten,
- Warnleuchten,
- Seitenfahrleuchten,
- Seitenmarkierungsleuchten.

Insbesondere handelt es sich um Leuchten, die derart seitlich angeordnet sind, dass sie im Rückspiegel für den Fahrer eines Zugfahrzeugs (bei Geradeausfahrt) sichtbar sind. Dazu zählen auch Leuchten, die zwar am Heck angeordnet sind, aber seitlich überstehen, etwa die sogenannten Spurhalteleuchten gemäß der deutschen Straßenverkehrs-Zulassungs-Ordnung. Der Fahrer kann so die Annäherung an ein Objekt durch Blick in den Rückspiegel überwachen.

Gegenstand der Erfindung ist auch ein Bremsensteuergerät für ein elektronisches Bremssystem, wie voranstehend beschrieben. Das Bremsensteuergerät weist wenigstens einen Eingang zum Anschluss von Näherungssensoren, wenigstens einen Ausgang zum Anschluss eines Relais-Moduls auf, sowie Software zum Steuern des Relais-Moduls in Abhängigkeit von Signalen der Näherungssensoren.

Schließlich ist Gegenstand der Erfindung auch ein Fahrzeug mit elektronischem Bremssystem, wie voranstehend beschrieben. Vorzugsweise handelt es sich bei dem Fahrzeug um einen Anhänger. Insbesondere weist das Fahrzeug eine pneumatische Bremsanlage mit elektronischem Bremssystem auf.

Weitere Merkmale der Erfindung ergeben sich aus der Beschreibung im Übrigen und aus den Ansprüchen. Vorteilhafte Ausführungsformen der Erfindung werden nachfolgend anhand einer Zeichnung näher erläutert. Gezeigt ist eine vereinfachte Darstellung eines elektronischen Bremssystems.

Dargestellt ist ein im Zusammenhang mit der vorliegenden Erfindung relevanter Teil eines elektronischen Bremssystems eines Anhängefahrzeugs. Ein elektronisches Bremsensteuergerät 11 (auch ECU genannt) wird über eine Leitung 12 und eine Schnittstelle 13, insbesondere nach ISO 7638, mit elektrischer Energie versorgt. Über Busleitungen 14, 15 sind Näherungssensoren 16, 17, z. B. Ultraschallsensoren, an das Bremsensteuergerät 11 angeschlossen.

Spurhalteleuchten 18, 19 sind über Leitungen 20, 21, 22 und eine Schnittstelle 23, insbesondere nach ISO 12098, an eine Energieversorgung eines nicht gezeigten Zugfahrzeugs angeschlossen. Zwischen der von der Schnittstelle 23 kommenden Leitung 22 und den zu den Leuchten 18, 19 führenden Leitungen 20, 21 ist ein Relais-Modul 24 geschaltet. Dieses ist über eine Steuerleitung 25 vom Bremsensteuergerät 11 ansteuerbar. Entsprechend kann das Aufleuchten der Leuchten 18, 19 mit dem Bremsensteuergerät 11 gesteuert werden.

Im vorliegenden Fall sind die Sensoren 16, 17 am Anhängefahrzeug rückwärtsgerichtet. Bei Rückwärtsfahrt wird das Relais-Modul 24 über die Leitung 22 mit Spannung versorgt. Bei Annäherung an ein Hindernis wird letzteres von den Sensoren 16, 17 detektiert. Das Bremsensteuergerät 11 berechnet aus den Signalen der Sensoren 16, 17 Parameter für einen Intervallbetrieb der Leuchten 18, 19, etwa Leuchtdauer und Pausenlänge, und steuert das Relais-Modul 24 zur Aktivierung der Leuchten 18, 19 entsprechend an. Je geringer der Abstand der Sensoren 16, 17 zu einem Hindernis ist, umso größer ist die Frequenz, mit der die Leuchten 18, 19 blinken. Kurz vor Berührung des Hindernisses werden die Leuchten 18, 19 in einen Dauerlicht-Modus geschaltet. Die Leuchten 18, 19 sind als Spurhalteleuchten typischerweise im Rückspiegel des Zugfahrzeugs sichtbar, sodass der Fahrer das in Lichtsignale umgewandelte Ergebnis der Messung der Sensoren 16, 17 im Rückspiegel sehen kann.

Anstelle der Spurhalteleuchten 18, 19 können auch andere Leuchten vorgesehen sein, welche vorzugsweise im Rückspiegel des Zugfahrzeugs sichtbar sind. Dies ist aber nicht zwingend. Es reicht aus, wenn zumindest ein Lichtschein der Leuchten im Rückspiegel sichtbar ist.

### Bezugszeichenliste (Teil der Beschreibung)

- 11: Bremsensteuergerät
- 12: Leitung
- 13: Schnittstelle
- 14: Busleitung
- 15: Busleitung
- 16: Näherungssensor
- 17: Näherungssensor
- 18: Spurhalteleuchte
- 19: Spurhalteleuchte
- 20: Leitung
- 21: Leitung
- 22: Leitung
- 23: Schnittstelle
- 24: Relais-Modul
- 25: Steuerleitung

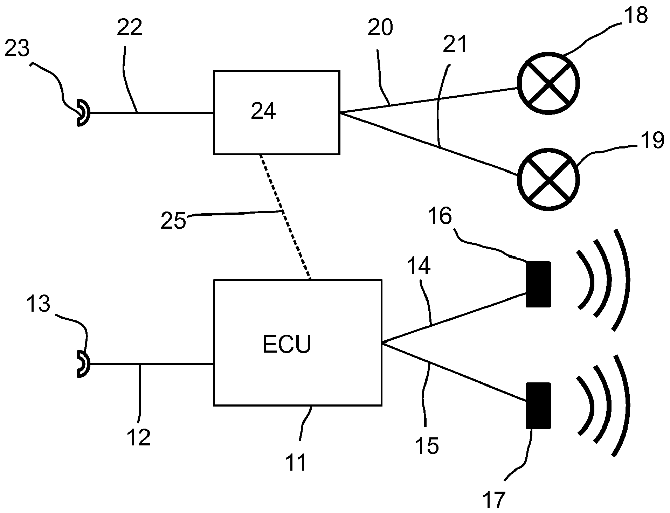

## Patentansprüche

1. Elektronisches Bremssystem für Fahrzeuge, mit elektronischem Bremsensteuergerät (11), Näherungssensoren (16, 17) und Leuchten (18, 19), wobei die Näherungssensoren (16, 17) mit dem Bremsensteuergerät (11) verbunden sind und die Leuchten (18, 19) über Leitungen (20, 21, 22) mit einer mit Spannung versorgten Schnittstelle (23) verbunden sind, **dadurch gekennzeichnet, dass** in den Leitungen (20, 21, 22) zwischen der Schnittstelle (23) und den Leuchten (18, 19) ein Relais-Modul (24) vorgesehen und zur Aktivierung der Leuchten (18, 19) vom Bremsensteuergerät (11) ansteuerbar ist.

2. Elektronisches Bremssystem nach Anspruch 1, **dadurch gekennzeichnet, dass** wenigstens eine der nachfolgenden Leuchten über Leitungen (20, 21) mit dem Relais-Modul (24) verbunden ist:
- seitliche Leuchten,
- Spurhalteleuchten (18, 19),
- Positionsleuchten,
- Warnleuchten,
- Seitenfahrleuchten,
- Seitenmarkierungsleuchten.

3. Bremsensteuergerät für ein elektronisches Bremssystem nach Anspruch 1 oder 2, mit wenigstens einem Eingang zum Anschluss von Näherungssensoren (16, 17), mit wenigstens einem Ausgang zum Anschluss eines Relais-Moduls (24), und mit Software zum Steuern des Relais-Moduls (24) in Abhängigkeit von Signalen der Näherungssensoren (16, 17).

4. Fahrzeug mit elektronischem Bremssystem nach Anspruch 1 oder 2 und mit einem Bremsensteuergerät nach Anspruch 3.
